# EUROPEAN PATENT SPECIFICATION

(11) **EP 4 606 209 B1**
(45) Date of publication and mention of the grant of the patent: **11.03.2026**
(21) Application number: 24159560.2
(22) Date of filing: 26.02.2024
(51) Int. Cl.: A01G 3/025, A01G 3/04, A01G 3/08

(54) **HINGE FOR A HAND TOOL, IN PARTICULAR FOR A TREE TRIMMER**
SCHARNIER FÜR EIN HANDWERKZEUG, INSBESONDERE FÜR EINEN BAUMSCHNEIDER
CHARNIÈRE POUR OUTIL À MAIN, EN PARTICULIER POUR TAILLEUR D'ARBRES

(43) Date of publication of application: 27.08.2025
(73) Proprietor: Husqvarna AB, 561 82 Huskvarna (SE)
(72) Inventor: Kistler, Michael, 89185 Hüttisheim (DE); Maag, Markus, 89081 Ulm (DE)
(74) Representative: Finkele, Rolf

(56) References cited:
- EP-A1- 2 311 310
- EP-B1- 1 657 457
- EP-B1- 3 282 827
- DE-A1- 102012 212 786
- US-A1- 2013 205 601

## Description

The present invention relates to a hinge for a hand tool. In particular, the present invention relates to a hinge for a tree trimmer or the like. Further, the present invention relates to a hand tool, in particular a tree trimmer, comprising at least one hinge.

The angle of a hinge for a hand tool is usually adjustable and fixable. However, the hinge is often loosened since the plastic of the hinge flows under pressure. Sometimes the hinge is clamped by a screw. EP1657457B1, DE102012212786A1, EP3282827B1 and US2013/205601A1 disclose different examples of hinges for a hand tool.

It is an object of the present invention to provide a hinge for a hand tool, wherein the angle of said hinge is adjustable and stable fixable by the user.

The object of the present invention is achieved by a hinge for a hand tool according to claim 1.

The present invention provides a hinge for a hand tool, in particular for a tree trimmer of the like, wherein the hinge comprises:
- a first hinge part including a first half-shell and a second half-shell,
- a second hinge part pivotable relative to the first hinge part around a swivel axis of the hinge,
- a rotary knob arranged at the first hinge part and rotatable around the swivel axis, and
- a push element linearly moveable along the swivel axis inside the first hinge part,
wherein the push element is pressed or pressable against a contact surface of the second hinge part by rotating the rotary knob, so that the hinge is locked or at least rough-running.

The core of the present invention is the rotary knob and the push element at the first hinge part, wherein said push element is pressable against the contact surface of the second hinge part by rotating said rotary knob. By rotating the rotary knob the user can easily adjust that the hinge is locked or at least rough-running. The first hinge part is made up of the first half-shell and the second half-shell, so that the rotary knob and the push element can be easily mounted inside the first hinge part.

Preferably, the rotary knob and the push element are coupled via at least one pair of complementary threads, so that the rotation of the rotary knob results in the linear movement of the push element. The threads allow a reliable mechanical transmission, particularly of force and7or movement, from the rotary knob to the push element.

For example, the rotary knob includes at least one external thread, while the push element includes at least one internal thread. In this case, the push element encloses a shaft of the rotary knob.

Further, a grip portion of the rotary knob may be arranged at the outer side of the first hinge part, while a shaft of the rotary knob (20) is arranged inside the first hinge part. The user can manually rotate the rotary knob and hence adjust the stiffness of the hinge by the grip portion. Alternatively, the rotary knob may be embedded in the first hinge part and rotatable by a tool.

In particular, at least one spring element is arranged between the push element and the contact surface of the second hinge part. The spring element allows an elastic connection between the first hinge part and the second hinge part. Preferably, the spring element encloses the shaft of the rotary knob.

For example, the spring element includes at least one, preferably two disc springs, wherein said two disc springs are curved opposite to each other. The disc springs are standard elements. Alternatively, the spring element includes at least one coil spring.

Besides, the spring element between the push element and the contact surface of the second hinge part may be omitted. In this case, the elastic properties of the material of the push element and/or the contact surface are used.

In particular, the rotary knob includes at least one circumferential tongue, while the first hinge part includes at least one circumferential groove, wherein said circumferential groove and circumferential tongue are at least partially complementary to each other. The circumferential groove and the circumferential tongue guarantee that the rotary knob has only one degree of freedom, namely its rotation around the swivel axis. Alternatively, the rotary knob includes at least one circumferential groove, while the first hinge part includes at least one circumferential tongue. Furthermore, the rotary knob and the first hinge part may include one or more circumferential grooves as well as one or more circumferential tongues.

Further, at least one half-shell of the first hinge part is/are made of plastics. The half-shell made of plastics is easily producible by low cost.

Also, the second hinge part may include a first half-shell and a second half-shell. At least one half-shell of the second hinge part is/are made of plastics. Plastic is an elastic material, so that the spring elements may be omitted between the push element and the contact surface of the second hinge part.

Preferably, the hand tool is an integrated part of the first hinge part. Alternatively, the hand tool may be connected or connectable to said first hinge part.

In a similar way, a grip or a rod is connected or connectable to the second hinge part. Alternatively, a grip or a rod is an integrated part of said second hinge part.

Further, the push element includes at least one tongue extending axially to the rotation axis of the rotary knob, while the first hinge part includes a groove for receiving said tongue, so that the push element is only movable along the rotation axis of the rotary knob. The tongue and the groove guarantee that the push element is only movable along the rotation axis of the rotary knob and the swivel axis.

Additionally, the first hinge part may include a first stop cam, while the rotary knob may include a second stop cam, wherein the first stop cam and the second stop cam extend axially with regard to the swivel axis, so that the rotation angle of the rotary knob is limited.

In particular, the rotary knob includes at least one snap-in element, preferably two snap-in elements, for prefixing the push element and/or the spring element during assembling the hinge. The rotary knob with the push element and/or the spring element may be automatically set into the half-shell of the first hinge part during assembling.

According to an exemplary embodiment of the invention, the rotary knob comprises a radial outer surface, wherein the radial outer surface comprises a rotation restraining structure, particularly formed as a plurality of protrusions and recesses, wherein the first half shell of the first hinge part and/or the second half shell of the first hinge part comprise(s) a locking structure configured to functionally interact with the rotation restraining structure for restraining, particularly inhibiting, a rotation of the rotary knob relative to the first hinge part. It may be understood that the inner radial surface of the first hinge part may comprise the rotation restraining structure and the outer radial surface of the rotary knob may comprise the corresponding locking structure. The locking structure may particularly be formed as a recess corresponding to the shape of one of the plurality of protrusions. Thereby, a prevention of the rotation of the second hinge part relative to the first hinge part may be increased.

Further, the present invention relates to a hand tool, in particular a tree trimmer, wherein the hand tool comprises at least one hinge mentioned above.

Novel and inventive feature of the present invention are set forth in the appended claims.

The present invention will be described in further details with reference to the accompanied drawings, in which
- Figure 1: illustrates a schematic sectional perspective view of a hinge according to an exemplary embodiment of the present invention,
- Figure 2: illustrates a further schematic sectional perspective view of the hinge according to an exemplary embodiment of the present invention,
- Figure 3: illustrates another schematic sectional perspective view of the hinge according to an exemplary embodiment of the present invention,
- Figure 4: illustrates a schematic sectional side view of the hinge according to an exemplary embodiment of the present invention,
- Figure 5: illustrates a further schematic sectional perspective view of the hinge according to an exemplary embodiment of the present invention,
- Figure 6: illustrates another schematic sectional perspective view of the hinge according to an exemplary embodiment of the present invention, and
- Figure 7: illustrates a schematic sectional perspective view of the hinge according to an exemplary embodiment of the present invention in a pre-assembled state.

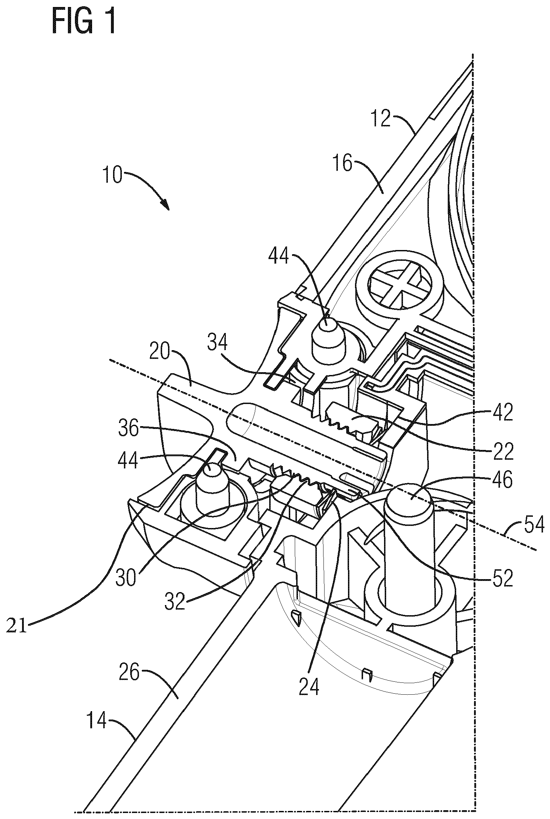

Figure 1 illustrates a schematic sectional perspective view of a hinge 10 according to an exemplary embodiment of the present invention. Particularly, the hinge 10 is provided for a hand tool, in particular for a tree trimmer.

The hinge 10 comprises a first hinge part 12 and a second hinge part 14. The second hinge part 14 is pivotable relative to the first hinge part 12 around a swivel axis 54. The first hinge part 12 is connected or connectable to the proper tool or said proper tool is integrated within the first hinge part 12. The second hinge part 14 is connected or connectable to a grip or a rod.

The first hinge part 12 includes a first half-shell 16 and a second half-shell 18 formed as a casing. In Figure 1 only the first half-shell 16 of the first hinge part 12 is shown. The first half-shell 16 and the second half-shell 18 are connected or connectable by connecting elements 44.

In a similar way, the second hinge part 14 includes a first half-shell 26 and a second first half-shell 28, wherein only the first half-shell 26 of the second hinge part 14 is shown in Figure 1. The first half-shell 26 and the second half-shell 28 are connected or connectable by at least one connecting element 46.

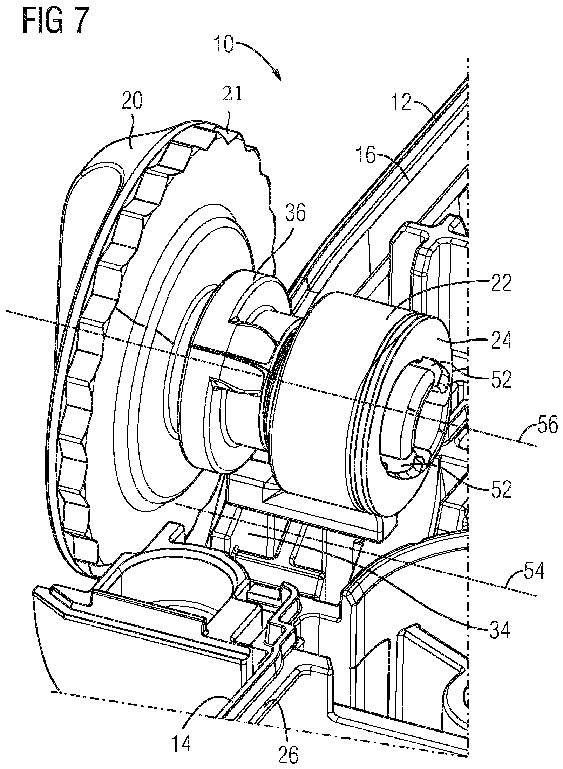

A rotary knob 20 is arranged rotatably within the first hinge part 12. The rotary knob 20 is rotatable around the swivel axis 54 of the hinge 10. The rotary knob 20 comprises a radial outer surface 21. The radial outer surface 20 comprises a rotation restraining surface 21 (illustrated in Figure 7). A grip portion of the rotary knob 20 is arranged outside of the first hinge part 12. A shaft of the rotary knob 20 is arranged inside the first hinge part 12. An external thread 30 encloses respectively is formed on the shaft of the rotary knob 20. Further, the rotary knob 20 includes a circumferential tongue 36, while the first hinge part 12 includes a circumferential groove 34. The circumferential tongue 36 is formed on the shaft of the rotary knob 20, particularly between the grip portion of the rotary knob 20 and the external thread 30. The circumferential groove 34 and the circumferential tongue 36 are at least partially complementary to each other. The circumferential groove 34 of the first hinge part 12 receives the circumferential tongue 36 of the rotary knob 20.

A push element 22 encloses the shaft of the rotary knob 20. The push element 22 includes an internal thread 32 engaging the external thread 30 of the rotary knob 20. By rotating the rotary knob 20, the push element 22 is moved along respectively in the direction parallel to the swivel axis 54 of the hinge 10 and the rotation axis 56 of the rotary knob 20. By rotating the rotary knob 20 in one direction, the push element 22 is pressed against a contact surface 42 of the second hinge part 14. By rotating the rotary knob 20 in an opposite direction to the one direction, the push element 22 is moved away from the contact surface 42 of the second hinge part 14.

According to this embodiment, a spring element 24 is arranged between the push element 22 and the contact surface 42 of the second hinge part 14. In this example, the spring element 24 is formed by two disc springs, wherein both disc springs are curved opposite to each other. Alternatively, the spring element 24 may be formed by a coil spring. Furthermore, the spring element 24 may be omitted if the push element 22 and/or the contact surface 42 are made of sufficient elastic material.

By pressing the push element 22 and the spring element 24 against the contact surface 42, the pivoting of the second hinge part 14 relative to the first hinge part 16 becomes rough-running.

Further, the rotary knob 20 includes one or more snap-in elements 52 arranged opposite to the grip portion of said rotary knob 20. Preferably, the rotary knob 20 includes two snap-in elements 52. The two snap-in elements 52 are provided for prefixing the push element 22 and the spring element 24 at the rotary knob 20 during assembling the hinge 10.

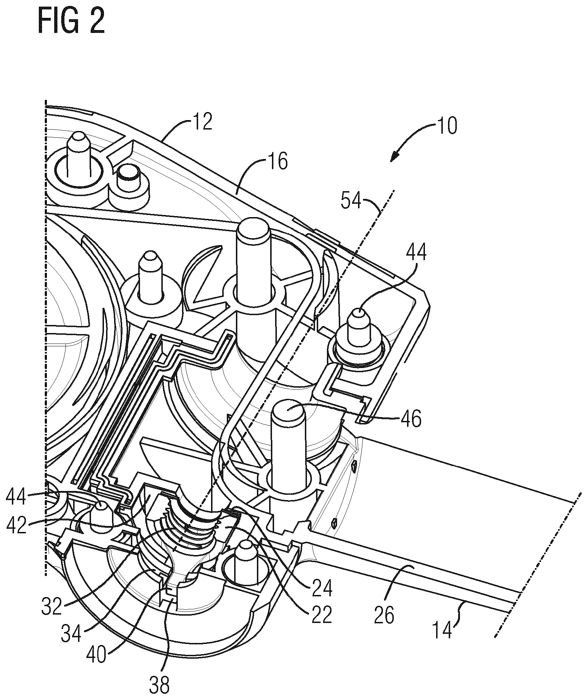

Figure 2 illustrates a further schematic sectional perspective view of the hinge 10 according to an exemplary embodiment of the present invention. In Figure 2 the first half-shell 16 of the first hinge part 12 and the first half-shell 26 of the second hinge part 14 are shown. Further, in Figure 2, the second half-shell 18 of the first hinge part 12 and the second half-shell 28 of the second hinge part 14 are not shown.

Further, the rotary knob 20 is omitted in Figure 2 for clarity. The push element 22 includes a tongue 40. The tongue 40 is slidable in a groove 38 formed in the first half-shell 16 of the first hinge part 12, wherein the tongue 40 is slidable parallel to the rotation axis 56 of the rotary knob 20. By rotating the rotary knob 20 the push element 22 is moved along respectively in a direction parallel to the swivel axis 54 of the hinge 10 and the rotation axis 56 of the rotary knob 20. By rotating the rotary knob 20, the tongue 40 of the push element 22 is moved in the groove 38 of the first half-shell 16 of the first hinge part 12. The groove 38 is provided as a duct for the tongue 40 of the push element 22. The interaction of the tongue 40 and the groove 38 prevents a rotation of the push element 22 during rotation of the rotary knob 20. Thus, the push element 22 has only one degree of freedom, namely the movement parallel to and along the swivel axis 54 of the hinge 10. The spring element 24, including two disc springs, is arranged between the push element 22 and the contact surface 42.

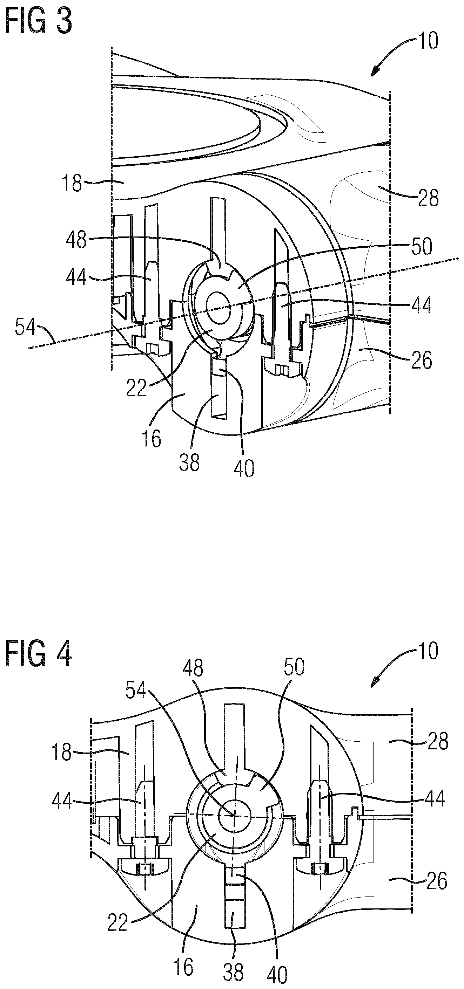

Figure 3 illustrates another schematic sectional perspective view of the hinge 10 according to an exemplary embodiment of the present invention. In Figure 3 the first half-shell 16 and the second half-shell 18 of the first hinge part 12 as well as the first half-shell 26 and the second half-shell 28 of the second hinge part 14 are partially shown. The first half-shell 16 and the second half-shell 18 of the first hinge part 12 are connected by the connecting elements 44.

A first stop cam 48 is provided at the second half-shell 18 of the first hinge part 12. The first stop cam 48 extends axially towards the shaft of the rotary knob 20. A second stop cam 50 extends axially from the shaft of the rotary knob 20. The interaction of the first stop cam 48 and the second stop cam 50 limits the rotation angle of the rotary knob 20, particularly relative to the first hinge part 12. In this example, the rotation angle of the rotary knob 20 is about 270°.

Figure 4 illustrates a schematic sectional side view of the hinge 10 according to an exemplary embodiment of the present invention. As in Figure 3, in Figure 4 the first half-shell 16 and the second half-shell 18 of the first hinge part 12 as well as the first half-shell 26 and the second half-shell 28 of the second hinge part 14 are partially shown. The first half-shell 16 and the second half-shell 18 of the first hinge part 12 are connected by the connecting elements 44.

Figure 4 clarifies the arrangement of the first stop cam 48 and the second stop cam 50. The first stop cam 48 and the second stop cam 50 restrict the rotation angle of the rotary knob 20, which is about 270° in this example.

Further, the groove 38 in the first half-shell 16 of the first hinge part 12 acts as the duct for the tongue 40 of the push element 22. The tongue 40 and the groove 38 prevent a rotation of the push element 22 during rotating the rotary knob 20. The only degree of freedom of the push element 22 is the movement along the swivel axis 54 of the hinge 10.

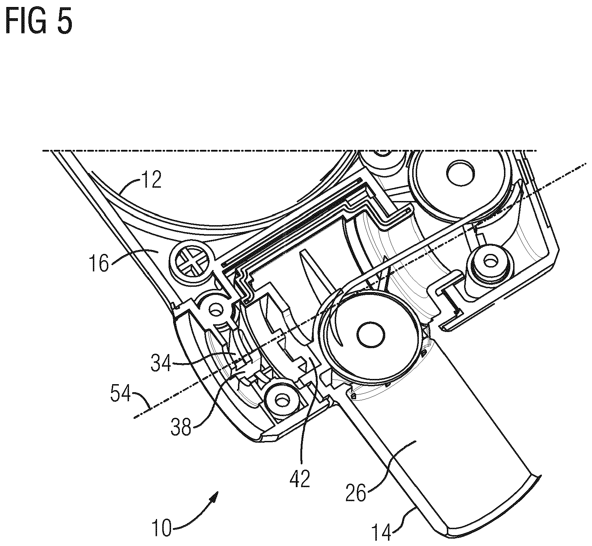

Figure 5 illustrates a further schematic sectional perspective view of the hinge 10 according to an exemplary embodiment of the present invention. The rotary knob 20, the push element 22 and the spring element 24 are omitted in Figure 5 for clarity.

A part of the circumferential groove 34 is formed in the first hinge part 12 and provided for receiving the circumferential tongue 36 of the rotary knob 20. Further, the groove 38 is formed in the first half-shell 16 of the first hinge part 12 and provided for receiving the tongue 40 of the push element 22. A part of the contact surface 42 is formed in the first half-shell 26 of the second hinge part 14.

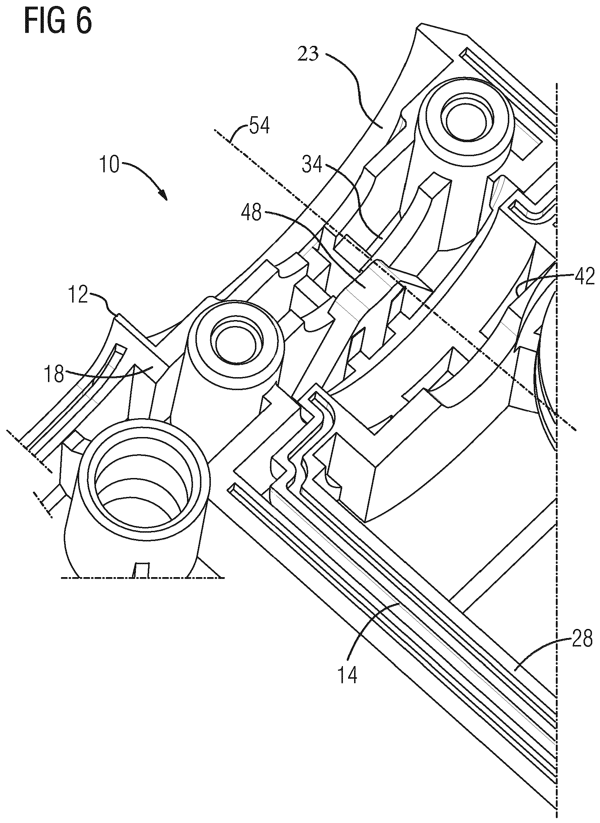

Figure 6 illustrates another schematic sectional perspective view of the hinge 10 according to an exemplary embodiment of the present invention. Figure 6 shows the second half-shell 18 of the first hinge part 12 and the second half-shell 28 of the second hinge part 14. The first half shell 16 (not shown in Figure 6) and the second half shell 18 of the first hinge part 12 comprise an inner radial surface 23. The inner radial surface 23 comprises a locking structure (not illustrated in Fig-ure 6) which is configured to interact with the rotation restraining structure 21 of the rotary knob 20 such that a rotation of the first hinge part 12 relative to the second hinge part 14 may be restrained.

A part of the circumferential groove 34 is formed in the second half-shell 18 of the first hinge part 12 and provided for receiving the circumferential tongue 36 of the rotary knob 20. A part of the contact surface 42 is formed in the second half-shell 28 of the second hinge part 14. Particularly, half of the circumferential groove 34 is formed in the first half shell 16 of the first hinge part 12 and another half of the circumferential groove 34 is formed in the second half-shell 18 of the first hinge part 12. Further, half of the contact surface 42 is formed in the first half-shell 26 of the second hinge part 14 and another half of the contact surface 42 is formed in the second half-shell 28 of the second hinge part 14.

The first stop cam 48 is provided at the second half-shell 18 of the first hinge part 12. The first stop cam 48 extends axially towards the shaft of the rotary knob 20. The interaction of the first stop cam 48 and the second stop cam 50 limits the rotation angle of the rotary knob 20.

Figure 7 illustrates a schematic sectional perspective view of the hinge 10 according to an exemplary embodiment of the present invention in a pre-assembled state. The hinge 10 comprises the first hinge part 12 and the second hinge part 14. The second hinge part 14 is pivotable relative to the first hinge part 12 around the swivel axis 54. The first hinge part 12 is connected or connectable to the proper tool or said proper tool is integrated within the first hinge part 12, while the second hinge part 14 is connected or connectable to a grip or rod.

The first hinge part 12 includes the first half-shell 16 and the second half-shell 18 formed as a casing, wherein in Figure 7 only the first half-shell 16 of the first hinge part 12 is shown. In a similar way, the second hinge part 14 includes the first half-shell 26 and the second half-shell 28, wherein only the first half-shell 26 of the second hinge part 14 is shown in Figure 7.

In Figure 7 the rotary knob 20 is shown in the pre-assembled state, wherein the push element 22 and the spring element 24 are connected to the rotary knob 20 but said rotary knob 20 is not yet inserted into the first half-shell 16 of the first hinge part 12. The push element 22 encloses the shaft of the rotary knob 20 and includes the internal thread 32 engaging the external thread 30 of the rotary knob 20. In this example, the rotary knob 20 includes two snap-in elements 52 arranged opposite to the grip portion of said rotary knob 20. The snap-in elements 52 prefix the push element 22 and the spring element 24 at the rotary knob 20 during assembling the hinge 10. In the assembled state, the rotary knob 20 is inserted within the first half-shell 16 of the first hinge part 12, wherein the rotation axis 56 of the rotary knob 20 is identical to the swivel axis 54 of the hinge 10. Furthermore, the rotary knob 20 comprises the outer radial surface 21 which comprises a plurality of protrusions and recesses which together form the rotation restraining structure.

Although an illustrative embodiment of the present invention has been described herein with reference to the accompanying drawings, it is to be understood that the present invention is not limited to that precise embodiment, and that various other changes and modifications may be affected therein by one skilled in the art without departing from the scope of the invention. All such changes and modifications are intended to be included within the scope of the invention as defined by the appended claims.

### Reference Numerals

- 10: hinge
- 12: first hinge part
- 14: second hinge part
- 16: first half-shell of the first hinge part
- 18: second half-shell of the first hinge part
- 20: rotary knob
- 21: radial outer surface
- 22: push element
- 23: radial inner surface
- 24: spring element
- 26: first half-shell of the second hinge part
- 28: second half-shell of the second hinge part
- 30: external thread
- 32: internal thread
- 34: circumferential groove
- 36: circumferential tongue
- 38: groove
- 40: tongue
- 42: contact surface
- 44: connecting element of the first hinge part
- 46: connecting element of the second hinge part
- 48: first stop cam
- 50: second stop cam
- 52: snap-in element
- 54: swivel axis
- 56: rotation axis

## Claims

1. A hinge (10) for a hand tool, in particular for a tree trimmer or the like, wherein the hinge (10) comprises:
- a first hinge part (12) including a first half-shell (16) and a second half-shell (18),
- a second hinge part (14) pivotable relative to the first hinge part (12) around a swivel axis (54) of the hinge (10),
- a rotary knob (20) arranged at the first hinge part (12) and rotatable around the swivel axis (54), and
- a push element (22) linearly moveable along the swivel axis (54) inside the first hinge part (12),
wherein the push element (22) is pressed or pressable against a contact surface (42) of the second hinge part (14) by rotating the rotary knob (20), so that the hinge (10) is locked or at least rough-running.

2. The hinge (10) according to claim 1,
**characterised in that**
the rotary knob (20) and the push element (22) are coupled via at least one pair of complementary threads (30, 32), so that the rotation of the rotary knob (20) results in the linear movement of the push element (22).

3. The hinge (10) according to claim 2,
**characterised in that**
the rotary knob (20) includes at least one external thread (30),
wherein the push element (22) includes at least one internal thread (32).

4. The hinge (10) according to any one of the preceding claims,
**characterised in that**
a grip portion of the rotary knob (20) is arranged at the outer side of the first hinge part (12),
wherein a shaft of the rotary knob (20) is arranged inside the first hinge part (12).

5. The hinge (10) according to any one of the preceding claims,
**characterised in that**
at least one spring element (24) is arranged between the push element (22) and the contact surface (42) of the second hinge part (14),
wherein preferably the spring element (24) encloses the shaft of the rotary knob (20).

6. The hinge (10) according to claim 5,
**characterised in that**
the spring element (24) includes at least one, preferably two disc springs,
wherein said two disc springs are curved opposite to each other.

7. The hinge (10) according to claim 5,
**characterised in that**
the spring element (24) includes at least one coil spring.

8. The hinge (10) according to any one of the preceding claims,
**characterised in that**
the rotary knob (20) includes at least one circumferential tongue (36),
wherein the first hinge part (12) includes at least one circumferential groove (34),
wherein the circumferential groove (34) and the circumferential tongue (36) are at least partially complementary to each other.

9. The hinge (10) according to any one of the preceding claims,
**characterised in that**
at least one of the first half-shell (16) of the first hinge part (12) and the second half-shell (18) of the first hinge part (12) is/are made of plastics.

10. The hinge (10) according to any one of the preceding claims,
**characterised in that**
the second hinge part (14) includes a first half-shell (26) and a second half-shell (28),
wherein preferably at least one of the first half-shell (26) of the second hinge part (14) and the second half-shell (18) of the second hinge part (14) is/are made of plastics.

11. The hinge (10) according to any one of the preceding claims,
**characterised in that**
the hand tool is an integrated part of the first hinge part (12) or the hand tool is connected or connectable to the first hinge part (12),
wherein one of a grip and a rod is connected or connectable to the second hinge part (14) or one of a grip and a rod is an integrated part of the second hinge part (14).

12. The hinge (10) according to any one of the preceding claims,
**characterised in that**
the push element (22) includes at least one tongue (40) extending axially to the rotation axis (56) of the rotary knob (20),
wherein the first hinge part (12) includes a groove (38) for receiving the tongue (40), so that the push element (22) is only movable along the rotation axis (56) of the rotary knob (20).

13. The hinge (10) according to any one of the preceding claims,
**characterised in that**
the first hinge part (12) includes a first stop cam (48), while the rotary knob (20) includes a second stop cam (50),
wherein the first stop cam (48) and the second stop cam (50) extend axially with regard to the swivel axis (54), so that the rotation angle of the rotary knob (20) is limited.

14. The hinge (10) according to any one of the preceding claims,
**characterised in that**
the rotary knob (20) includes at least one snap-in element (52), preferably two snap-in elements (52), for prefixing the push element (22) and/or the spring element (24) during assembling the hinge (10).

15. A hand tool, in particular a tree trimmer or the like,
**characterised in that**
the hand tool comprises at least one hinge (10) according to any one of the preceding claims.

## Patentansprüche

1. Scharnier (10) für ein Handwerkzeug, insbesondere für eine Baumschere oder dergleichen, wobei das Scharnier (10) umfasst:
- ein erstes Scharnierteil (12), das eine erste Halbschale (16) und eine zweite Halbschale (18) einschließt,
- ein zweites Scharnierteil (14), das relativ zu dem ersten Scharnierteil (12) um eine Schwenkachse (54) des Scharniers (10) schwenkbar ist,
- einen Drehknopf (20), der an dem ersten Scharnierteil (12) angeordnet und um die Schwenkachse (54) drehbar ist, und
- ein Drückelement (22), das entlang der Schwenkachse (54) innerhalb des ersten Scharnierteils (12) linear bewegbar ist,
wobei das Drückelement (22) durch Drehen des Drehknopfs (20) gegen eine Kontaktoberfläche (42) des zweiten Scharnierteils (14) gedrückt wird oder drückbar ist, sodass das Scharnier (10) verriegelt oder zumindest schwergängig ist.

2. Scharnier (10) nach Anspruch 1,
**dadurch gekennzeichnet, dass**
der Drehknopf (20) und das Drückelement (22) über mindestens ein Paar komplementärer Gewinde (30, 32) gekoppelt sind, sodass die Drehung des Drehknopfs (20) zu der linearen Bewegung des Drückelements (22) führt.

3. Scharnier (10) nach Anspruch 2,
**dadurch gekennzeichnet, dass**
der Drehknopf (20) mindestens ein Außengewinde (30) einschließt,
wobei das Drückelement (22) mindestens ein Innengewinde (32) einschließt.

4. Scharnier (10) nach einem der vorstehenden Ansprüche,
**dadurch gekennzeichnet, dass**
ein Griffabschnitt des Drehknopfs (20) an der Außenseite des ersten Scharnierteils (12) angeordnet ist,
wobei ein Schaft des Drehknopfs (20) innerhalb des ersten Scharnierteils (12) angeordnet ist.

5. Scharnier (10) nach einem der vorstehenden Ansprüche,
**dadurch gekennzeichnet, dass**
mindestens ein Federelement (24) zwischen dem Drückelement (22) und der Kontaktoberfläche (42) des zweiten Scharnierteils (14) angeordnet ist,
wobei vorzugsweise das Federelement (24) den Schaft des Drehknopfs (20) umschließt.

6. Scharnier (10) nach Anspruch 5,
**dadurch gekennzeichnet, dass**
das Federelement (24) mindestens eine, vorzugsweise zwei Tellerfedern einschließt,
wobei die beiden Tellerfedern entgegengesetzt zueinander gekrümmt sind.

7. Scharnier (10) nach Anspruch 5,
**dadurch gekennzeichnet, dass**
das Federelement (24) mindestens eine Schraubenfeder einschließt.

8. Scharnier (10) nach einem der vorstehenden Ansprüche,
**dadurch gekennzeichnet, dass**
der Drehknopf (20) mindestens eine umlaufende Zunge (36) einschließt,
wobei der erste Scharnierteil (12) mindestens eine umlaufende Nut (34) einschließt, wobei die umlaufende Nut (34) und die umlaufende Zunge (36) zumindest teilweise zueinander komplementär sind.

9. Scharnier (10) nach einem der vorstehenden Ansprüche,
**dadurch gekennzeichnet, dass**
mindestens eine von der ersten Halbschale (16) des ersten Scharnierteils (12) und der zweiten Halbschale (18) des ersten Scharnierteils (12) aus Kunststoff hergestellt ist/sind.

10. Scharnier (10) nach einem der vorstehenden Ansprüche,
**dadurch gekennzeichnet, dass**
der zweite Scharnierteil (14) eine erste Halbschale (26) und eine zweite Halbschale (28) einschließt,
wobei vorzugsweise mindestens eine der ersten Halbschale (26) des zweiten Scharnierteils (14) und der zweiten Halbschale (18) des zweiten Scharnierteils (14) aus Kunststoff hergestellt ist/sind.

11. Scharnier (10) nach einem der vorstehenden Ansprüche,
**dadurch gekennzeichnet, dass**
das Handwerkzeug ein integrierter Teil des ersten Scharnierteils (12) ist oder das Handwerkzeug mit dem ersten Scharnierteil (12) verbunden oder verbindbar ist,
wobei eines von einem Griff und einer Stange mit dem zweiten Scharnierteil (14) verbunden oder verbindbar ist oder eines von einem Griff und einer Stange ein integrierter Teil des zweiten Scharnierteils (14) ist.

12. Scharnier (10) nach einem der vorstehenden Ansprüche,
**dadurch gekennzeichnet, dass**
das Drückelement (22) mindestens eine Zunge (40) einschließt, die sich axial zu der Drehachse (56) des Drehknopfs (20) erstreckt,
wobei der erste Scharnierteil (12) eine Nut (38) zum Aufnehmen der Zunge (40) einschließt, sodass das Drückelement (22) nur entlang der Drehachse (56) des Drehknopfs (20) bewegbar ist.

13. Scharnier (10) nach einem der vorstehenden Ansprüche,
**dadurch gekennzeichnet, dass**
der erste Scharnierteil (12) einen ersten Anschlagnocken (48) einschließt, während der Drehknopf (20) einen zweiten Anschlagnocken (50) einschließt,
wobei sich der erste Anschlagnocken (48) und der zweite Anschlagnocken (50) bezüglich der Schwenkachse (54) axial erstrecken, sodass der Drehwinkel des Drehknopfs (20) begrenzt ist.

14. Scharnier (10) nach einem der vorstehenden Ansprüche,
**dadurch gekennzeichnet, dass**
der Drehknopf (20) mindestens ein Einrastelement (52), vorzugsweise zwei Einrastelemente (52), zum Vorfixieren des Drückelements (22) und/oder des Federelements (24) während des Montierens des Scharniers (10) einschließt.

15. Handwerkzeug, insbesondere eine Baumschere oder dergleichen,
**dadurch gekennzeichnet, dass**
das Handwerkzeug mindestens ein Scharnier (10) nach einem der vorstehenden Ansprüche umfasst.

## Revendications

1. Charnière (10) pour un outil à main, en particulier pour un élagueur ou similaire, dans laquelle la charnière (10) comprend :
- une première partie de charnière (12) comportant une première demi-coque (16) et une seconde demi-coque (18),
- une seconde partie de charnière (14) pouvant pivoter par rapport à la première partie de charnière (12) autour d'un axe de pivotement (54) de la charnière (10),
- un bouton rotatif (20) agencé au niveau de la première partie de charnière (12) et pouvant tourner autour de l'axe de pivotement (54), et
- un élément de poussée (22) mobile linéairement le long de l'axe de pivotement (54) à l'intérieur de la première partie de charnière (12),
dans laquelle l'élément de poussée (22) est pressé ou peut être pressé contre une surface de contact (42) de la seconde partie de charnière (14) en tournant le bouton rotatif (20), de sorte que la charnière (10) est verrouillée ou au moins fonctionne de manière irrégulière.

2. Charnière (10) selon la revendication 1,
**caractérisée en ce que**
le bouton rotatif (20) et l'élément de poussée (22) sont accouplés par l'intermédiaire d'au moins une paire de filetages complémentaires (30, 32), de sorte que la rotation du bouton rotatif (20) entraîne le mouvement linéaire de l'élément de poussée (22).

3. Charnière (10) selon la revendication 2,
**caractérisée en ce que**
le bouton rotatif (20) comporte au moins un filetage externe (30),
dans laquelle l'élément de poussée (22) comporte au moins un filetage interne (32).

4. Charnière (10) selon l'une quelconque des revendications précédentes,
**caractérisée en ce que**
une portion de prise du bouton rotatif (20) est agencée au niveau du côté externe de la première partie de charnière (12),
dans laquelle un arbre du bouton rotatif (20) est agencé à l'intérieur de la première partie de charnière (12).

5. Charnière (10) selon l'une quelconque des revendications précédentes,
**caractérisée en ce que**
au moins un élément de type ressort (24) est agencé entre l'élément de poussée (22) et la surface de contact (42) de la seconde partie de charnière (14),
dans laquelle, de préférence, l'élément de type ressort (24) entoure l'arbre du bouton rotatif (20).

6. Charnière (10) selon la revendication 5,
**caractérisée en ce que**
l'élément de type ressort (24) comporte au moins un, de préférence deux ressorts à disque,
dans laquelle lesdits deux ressorts à disque sont incurvés à l'opposé l'un de l'autre.

7. Charnière (10) selon la revendication 5,
**caractérisée en ce que**
l'élément de type ressort (24) comporte au moins un ressort hélicoïdal.

8. Charnière (10) selon l'une quelconque des revendications précédentes,
**caractérisée en ce que**
le bouton rotatif (20) comporte au moins une languette circonférentielle (36),
dans laquelle la première partie de charnière (12) comporte au moins une rainure circonférentielle (34), dans laquelle la rainure circonférentielle (34) et la languette circonférentielle (36) sont au moins partiellement complémentaires l'une de l'autre.

9. Charnière (10) selon l'une quelconque des revendications précédentes,
**caractérisée en ce que**
au moins l'une parmi la première demi-coque (16) de la première partie de charnière (12) et la seconde demi-coque (18) de la première partie de charnière (12) sont en plastique.

10. Charnière (10) selon l'une quelconque des revendications précédentes,
**caractérisée en ce que**
la seconde partie de charnière (14) comporte une première demi-coque (26) et une seconde demi-coque (28),
dans laquelle, de préférence, au moins l'une parmi la première demi-coque (26) de la seconde partie de charnière (14) et la seconde demi-coque (18) de la seconde partie de charnière (14) sont en plastique.

11. Charnière (10) selon l'une quelconque des revendications précédentes,
**caractérisée en ce que**
l'outil à main est une pièce solidaire de la première partie de charnière (12) ou l'outil à main est relié ou peut être relié à la première partie de charnière (12),
dans laquelle l'une parmi une prise et une tige est reliée ou peut être reliée à la seconde partie de charnière (14) ou l'une parmi une prise et une tige est une pièce solidaire de la seconde partie de charnière (14).

12. Charnière (10) selon l'une quelconque des revendications précédentes,
**caractérisée en ce que**
l'élément de poussée (22) comporte au moins une languette (40) s'étendant axialement à l'axe de rotation (56) du bouton rotatif (20),
dans laquelle la première partie de charnière (12) comporte une rainure (38) destinée à recevoir la languette (40), de sorte que l'élément de poussée (22) est uniquement mobile le long de l'axe de rotation (56) du bouton rotatif (20).

13. Charnière (10) selon l'une quelconque des revendications précédentes,
**caractérisée en ce que**
la première partie de charnière (12) comporte une première came d'arrêt (48), tandis que le bouton rotatif (20) comporte une seconde came d'arrêt (50),
dans laquelle la première came d'arrêt (48) et la seconde came d'arrêt (50) s'étendent axialement par rapport à l'axe de pivotement (54), de sorte que l'angle de rotation du bouton rotatif (20) est limité.

14. Charnière (10) selon l'une quelconque des revendications précédentes,
**caractérisée en ce que**
le bouton rotatif (20) comporte au moins un élément encliquetable (52), de préférence deux éléments encliquetables (52), pour préfixer l'élément de poussée (22) et/ou l'élément de type ressort (24) pendant l'assemblage de la charnière (10).

15. Outil à main, en particulier un élagueur ou similaire,
**caractérisé en ce que**
l'outil à main comprend au moins une charnière (10) selon l'une quelconque des revendications précédentes.
